# EUROPÄISCHE PATENTANMELDUNG

(11) **EP 4 056 026 A1**
(43) Veröffentlichungstag der Anmeldung: **14.09.2022**
(21) Anmeldenummer: 22159059.9
(22) Anmeldetag: 28.02.2022
(51) Int. Cl.: A01F 15/10

(54) **FÖRDERVORRICHTUNG FÜR EINE BALLENPRESSE**

(30) Priorität: 12.03.2021 DE 102021106061
(71) Anmelder: Maschinenfabrik Bernard Krone GmbH & Co. KG, 48480 Spelle (DE)
(72) Erfinder: OSKAMP, TOBIAS, 48607 Ochtrup (DE); ROLING, STEFFEN, 48496 Hopsten (DE)

(57) **Zusammenfassung**

Die Erfindung betrifft eine Fördervorrichtung (10) für eine Ballenpresse (1), mit einer sich entlang einer axialen Zubringerachse (B) erstreckenden Zubringerleiste (30), die einen ersten Leistenteil (31) mit einer Mehrzahl von Zubringerzinken (32) sowie einem Zubringerhebel (33) aufweist, wobei die Fördervorrichtung (10) dazu eingerichtet ist, in einem Sammelmodus mittels der Zubringerzinken (32) Erntegut innerhalb einer Sammelkammer (11) in Richtung auf eine Presskammer (6) zu fördern, und in einem Zubringermodus mittels der Zubringerzinken (32) Erntegut aus der Sammelkammer (11) in die Presskammer (6) zu fördern. Um ein zuverlässiges und einfaches System bereitzustellen, das bei einer Zubringerleiste einen Wechsel zwischen einem Sammelmodus und einem Zubringermodus ermöglicht, ist erfindungsgemäß vorgesehen, dass die Zubringerleiste (30) einen zweiten Leistenteil (40) mit einem Zubringer-Sammelhebel (41) aufweist, wobei die Leistenteile (31, 40) um die Zubringerachse (B) gegeneinander verdrehbar und durch eine Kupplung (50) derart verbunden sind, dass sie, ausgehend von einer Anschlagposition, in einer Verdrehungsrichtung (V) rückstellend gegeneinander verdrehbar und in Gegenrichtung (G) verdrehungshindernd gekoppelt sind, wobei die Fördervorrichtung (10) dazu eingerichtet ist, den ersten Leistenteil (31) im Sammelmodus mittels des Zubringer-Sammelhebels (41) und durch Kraftübertragung über die Kupplung (50) zu führen, und ihn im Zubringermodus wenigstens teilweise mittels des Zubringerhebels (33), unter Verdrehung gegenüber dem zweiten Leistenteil (40), zu führen. Die Erfindung betrifft weiterhin eine Zubringerleiste (30) für eine Fördervorrichtung (10) einer Ballenpresse (1) sowie eine Ballenpresse (1).

## Beschreibung

Die vorliegende Erfindung betrifft eine Fördervorrichtung für eine Ballenpresse nach dem Oberbegriff von Anspruch 1, eine Zubringerleiste nach dem Oberbegriff von Anspruch 16 sowie eine Ballenpresse nach dem Oberbegriff von Anspruch 17.

Ballenpressen werden in der Landwirtschaft eingesetzt, um Erntegut wie z.B. Heu oder Stroh, welches zuvor aufgenommen wurde, zu Ballen zu verpressen. Dabei wird dem Ballen nach und nach Erntegut zugeführt, bis er eine vorgesehene Form und Größe erreicht hat und verpackt bzw. umwickelt werden kann. Das Umwickeln mit einem Bindematerial kann entweder innerhalb der Ballenpresse oder in einem hiervon separaten Ballenwickelgerät erfolgen. Das Erntegut wird normalerweise durch eine Pick-up, die in die Ballenpresse integriert ist, vom Boden aufgenommen. Im Falle einer Quaderballenpresse erfolgt das Verpressen des aufgesammelten Ernteguts in zwei Stufen. Zunächst wird das von der Pick-up übernommene und ggf. durch eine Schneidvorrichtung geschnittene Erntegut durch eine Fördervorrichtung bzw. Sammelvorrichtung innerhalb einer Sammelkammer weitergefördert und dabei gerafft bzw. vorverdichtet. Der Sammelkammer ist eine Presskammer nachgeordnet, die von der Sammelkammer durch einen Rückhalter abgegrenzt ist. Wenn eine gewisse Menge von vorverdichtetem Erntegut in der Sammelkammer angesammelt wurde, gibt der Rückhalter den Zugang zur Presskammer frei und das Erntegut wird in die Presskammer befördert. Dort wirkt ein oszillierender Presskolben auf das Erntegut ein und führt das eigentliche Verpressen durch. Es wird somit vorverdichtetes Erntegut portionsweise in die Presskammer überführt, wo ein sukzessiver Aufbau des Quaderballens erfolgt.

Die Förder- bzw. Sammelvorrichtung muss im zeitlichen Wechsel zwei Funktionen erfüllen. Zum einen das Sammeln bzw. Raffen des Erntegutes innerhalb der Sammelkammer sowie zum anderen das Zubringen bzw. Zuführen des Erntegutes aus der Sammelkammer in die Presskammer. Beide Funktionen werden in der Regel durch einen oder mehrere Rechen realisiert, die jeweils mit einer Mehrzahl von Zinken auf das Erntegut einwirken. Für ein optimales Zuführen zur Presskammer ist eine andere Bewegung der Zinken notwendig bzw. zielführend als für das vorausgehende Sammeln. Hierzu sind im Stand der Technik unterschiedliche Lösungen bekannt, z.B. aus der EP 0 870 425 A1 oder der EP 2 962 544 A1.

Bei einer im Stand der Technik bekannten Ausführungsform sind eine Mehrzahl von Rechen jeweils drehbar auf einer antreibbaren Rotoreinheit montiert. Ein oder mehrere Rechen, die auch als Sammelleisten bezeichnet werden, sind ausschließlich zum Sammeln vorgesehen, während wenigstens ein anderer Rechen, der auch als Zubringerleiste bezeichnet wird, zum Zuführen vorgesehen ist. Dabei ist es bekannt, dass jede Sammelleiste einen drehfest mit ihr verbundenen Sammelhebel aufweist, der über eine oder mehrere drehbar gelagerte Rollen an wenigstens einer ersten Kurvenbahn geführt ist. Durch das Zusammenwirken der angetriebenen Rotation der Rotoreinheit, an welcher die Sammelleiste drehbar gelagert ist, und des über die erste Kurvenbahn geführten Sammelhebels kann über den gesamten Verlauf einer Umdrehung die Ausrichtung der Sammelleiste und somit ihrer Zinken definiert werden. In entsprechender Weise weist die Zubringerleiste einen Zubringerhebel auf, der über eine oder mehrere drehbar gelagerte Rollen an wenigstens einer zweiten Kurvenbahn geführt ist.

Wie in der DE 42 19 490 A1 beschrieben, kann die Führung durch die zweite Kurvenbahn bei jeder Umdrehung gleich sein, was allerdings bedeutet, dass bei jeder Umdrehung der Rotoreinheit Erntegut aus der Sammelkammer in die Presskammer gefördert wird. Dies kann aus verschiedenen Gründen ineffizient sein, bspw. weil die Menge von Erntegut, dass aufgenommen an die Sammelkammer übergeben wird, deutlich variieren kann. Daher sind Systeme entwickelt worden, bei denen die Zubringerleiste wahlweise in einem Sammelmodus oder in einem Zubringermodus arbeiten kann. Im Sammelmodus entspricht die Bewegung annähernd derjenigen der Sammelleisten, während im Zubringermodus eine Bewegung erfolgt, die speziell an das Fördern von Erntegut in die Presskammer angepasst ist. Hierzu kann die zweite Kurvenbahn im Zubringermodus anders positioniert werden als im Sammelmodus, was z.B. in der DE 198 29 276 A1 beschrieben wird. Das Umschalten zwischen Sammelmodus und Zubringermodus kann z.B. in Abhängigkeit vom Füllgrad der Sammelkammer ausgelöst werden. Ein ähnliches System ist aus der EP 0 761 086 A1 bekannt.

Aufgabe der Erfindung ist es, ein zuverlässiges und einfaches System bereitzustellen, das bei einer Zubringerleiste einen Wechsel zwischen einem Sammelmodus und einem Zubringermodus ermöglicht.

Die Aufgabe wird gelöst mit einer Fördervorrichtung für eine Ballenpresse, mit den Merkmalen des unabhängigen Patentanspruchs 1. Vorteilhafte Ausführungsformen sind den abhängigen Ansprüchen entnehmbar.

Dafür wird eine Fördervorrichtung für eine Ballenpresse geschaffen, mit einer an einem antreibbaren Leistenträger um eine axiale Zubringerachse drehbar gelagerten Zubringerleiste, die einen ersten Leistenteil mit einer Mehrzahl von Zubringerzinken sowie einem Zubringerhebel aufweist, wobei die Fördervorrichtung dazu eingerichtet ist, in einem Sammelmodus mittels der Zubringerzinken Erntegut innerhalb einer Sammelkammer in Richtung auf eine Presskammer zu fördern, und in einem Zubringermodus mittels der Zubringerzinken Erntegut aus der Sammelkammer in die Presskammer zu fördern.

Bei der Ballenpresse kann es sich insbesondere um eine Quaderballenpresse handeln, ggf. aber auch z.B. um eine Rundballenpresse. Allgemein ist eine derartige Ballenpresse dazu ausgebildet, ein zuvor (normalerweise durch die Ballenpresse selbst) vom Boden aufgenommenes Erntegut zu Ballen zu pressen. Bei dem Erntegut kann es sich insbesondere um Halmgut wie Gras, Stroh oder Heu handeln. Der Begriff "Ballenpresse" schließt hierbei ausdrücklich auch Maschinen ein, die zusätzlich zu einem Pressen des Erntegutes zu Ballen auch ein Binden bzw. Verpacken der Ballen durchführen. Es kann sich um eine selbstfahrende oder gezogene Ballenpresse handeln.

Die Fördervorrichtung ist in eingebautem Zustand an einer Sammelkammer angeordnet oder weist eine Sammelkammer auf. Die Sammelkammer, die zumindest in einigen Ausführungsformen auch als Vorpresskammer, Förderkanal oder Zubringerkanal bezeichnet werden kann, ist bezüglich des Erntegutstroms vor einer Presskammer angeordnet, in welcher das eigentliche Verpressen des Erntegutes zu Ballen durchgeführt wird. Wenngleich die Erfindung nicht hierauf beschränkt ist, ist in der Presskammer normalerweise ein oszillierender Presskolben angeordnet, der auf das in die Presskammer eingebrachte Erntegut einwirkt. Die Presskammer kann zumindest in einigen Ausführungsformen auch als Pressraum oder Presskanal bezeichnet werden. Die Sammelkammer bzw. die Fördervorrichtung ist ihrerseits bezüglich des Erntegutstroms normalerweise direkt oder indirekt einer Aufnahmevorrichtung bzw. Pick-up nachgeordnet, welche Erntegut vom Boden aufnimmt.

Die Fördervorrichtung weist eine sich entlang einer axialen Zubringerachse erstreckende Zubringerleiste auf, die einen ersten Leistenteil mit einer Mehrzahl von Zubringerzinken sowie einem Zubringerhebel aufweist. Die Zubringerleiste könnte alternativ auch als Zuführleiste, Zubringerrechen oder Zuführrechen bezeichnet werden. Sie erstreckt sich entlang einer Zubringerachse, die eine axiale Richtung (und somit auch eine tangentiale und radiale Richtung) definiert. Die Zubringerleiste erstreckt sich entlang der Zubringerachse, was allgemein bedeutet, dass sie eine nicht-vernachlässigbare Ausdehnung in Richtung der Zubringerachse aufweist. Dies kann u.U. ihre größte Ausdehnung sein. Des Weiteren kann die Zubringerleiste an der Zubringerachse ausgerichtet sein. Teile der Zubringerleiste können symmetrisch bezüglich der Zubringerachse angeordnet sein. Die Zubringerzinken erstrecken sich normalerweise radial von der Zubringerachse fort. Verschiedene Elemente des ersten Leistenteils, welcher unter Umständen auch als erste Leistenbaugruppe bezeichnet werden kann, können lösbar oder nicht-lösbar miteinander verbunden sein. Normalerweise ist vorgesehen, dass die Zubringerzinken und der Zubringerhebel bezogen auf die Zubringerachse drehfest verbunden sind, wobei auch wenigstens ein Zubringerzinken einstückig mit dem Zubringerhebel ausgebildet sein kann. Der Begriff "Hebel" ist hier und im Folgenden weit auszulegen und bezeichnet allgemein ein Element, über welches ein Drehmoment ausgeübt werden kann, im Falle des Zubringerhebels ein Drehmoment auf den ersten Leistenteil bezüglich der Zubringerachse. Allgemein erstreckt sich ein Hebel daher (radial) von der Drehachse (in diesem Fall der Zubringerachse) fort. Soweit kein entgegengesetztes größeres Drehmoment wirkt, kann der erste Leistenteil mittels des Zubringerhebels um die Zubringerachse geschwenkt werden.

Insgesamt ist die Fördervorrichtung dazu eingerichtet, in einem Sammelmodus mittels der Zubringerzinken Erntegut innerhalb der Sammelkammer in Richtung auf die Presskammer zu fördern, und in einem Zubringermodus mittels der Zubringerzinken Erntegut aus der Sammelkammer in die Presskammer zu fördern. D.h., im Sammelmodus bewegt die Fördervorrichtung die Zubringerzinken derart, dass sie Erntegut innerhalb der Sammelkammer in Richtung auf die Presskammer fördern, was der allgemeinen Bewegung des Erntegutstroms innerhalb der Ballenpresse entspricht. Im Sammelmodus ist normalerweise der Übergang zwischen der Sammelkammer und der Presskammer durch einen Rückhalter gesperrt, bis genug Erntegut in der Sammelkammer nahe der Presskammer angesammelt und vorverdichtet wurde. Neben dem Sammelmodus kann die Fördervorrichtung in einen Zubringermodus wechseln bzw. in diesen umgeschaltet werden, in welchem die Zubringerzinken das Erntegut aus der Sammelkammer in die Presskammer fördern bzw. heben. Sofern ein oben erwähnter Rückhalter vorhanden ist, gibt dieser zuvor den Zugang zur Presskammer frei. Dabei werden die Zubringerzinken im Sammelmodus einerseits und im Zubringermodus andererseits unterschiedlich bewegt, d.h. entsprechend unterschiedlicher Bewegungsbahnen.

Erfindungsgemäß weist die Zubringerleiste einen zweiten Leistenteil mit einem Zubringer-Sammelhebel auf, wobei die Leistenteile um die Zubringerachse gegeneinander verdrehbar und durch eine Kupplung derart verbunden sind, dass sie, ausgehend von einer Anschlagposition, in einer Verdrehungsrichtung rückstellend gegeneinander verdrehbar und in Gegenrichtung verdrehungshindernd gekoppelt sind. Man kann somit innerhalb der Zubringerleiste, abgesehen von dem oben erwähnten ersten Leistenteil (mit den Zubringerzinken), einen zweiten Leistenteil identifizieren, welcher einen Zubringer-Sammelhebel aufweist. Normalerweise sind die beiden Hebel axial endseitig an der Zubringerleiste angeordnet, insbesondere an axial entgegengesetzten Endbereichen der Zubringerleiste. Der erste Leistenteil und der zweite Leistenteil sind um die Zubringerachse gegeneinander verdrehbar verbunden. Dabei ist über eine zwischengeordnete Kupplung eine Verbindung gegeben, die bezüglich einer Anschlagposition eine rückstellende Verdrehbarkeit in einer Verdrehungsrichtung entgegen eines Rückstellmoments ermöglicht. D.h. wenn die beiden Leistenteile aus der Anschlagposition in Verdrehungsrichtung gegeneinander verdreht werden, wird durch die Kupplung ein Rückstellmoment aufgebaut, das bestrebt ist, die Leistenteile wieder in die Anschlagposition zurückzuführen. In Gegenrichtung wirkt die Kupplung verdrehungshindernd, d.h. zumindest unter normalen Betriebsbedingungen ist eine Verdrehung in Gegenrichtung nicht möglich oder auf ein vernachlässigbares Maß beschränkt. Die Gegenrichtung kann somit auch als Blockierrichtung oder Anschlagrichtung bezeichnet werden. Dabei wäre es denkbar, dass die Kupplung als Überlastkupplung dazu ausgebildet ist, bei Auftreten eines ungewöhnlich hohen Drehmoments zwischen den beiden Leistenteilen die Bewegung in Gegenrichtung freizugeben. In diesem Fall wäre die Kupplung derart ausgebildet, dass sie die entsprechende Bewegung erst dann freigibt, wenn das Drehmoment einen Wert erreicht, der beim normalen, störungsfreien Betrieb nicht zu erwarten ist. Üblicherweise bildet die Kupplung allerdings bezüglich der Gegenrichtung einen Anschlag, der eine (nennenswerte) Verdrehung in Gegenrichtung vollständig unterbindet.

Weiterhin ist die Fördervorrichtung erfindungsgemäß dazu eingerichtet, den ersten Leistenteil im Sammelmodus mittels des Zubringer-Sammelhebels und durch Kraftübertragung über die Kupplung zu führen, und ihn im Zubringermodus wenigstens teilweise mittels des Zubringerhebels, unter Verdrehung gegenüber dem zweiten Leistenteil, zu führen. D.h., der erste Leistenteil, an welchem die Zubringerzinken angeordnet sind, wird im Sammelmodus mittels des Zubringer-Sammelhebels geführt, wobei der Kraftfluss über den zweiten Leistenteil und die Kupplung zum ersten Leistenteil führt. Dabei wirkt die Fördervorrichtung auf den Zubringer-Sammelhebel und somit auf den zweiten Leistenteil ein. Es versteht sich, dass dabei die Einwirkung auf den zweiten Leistenteil wenigstens überwiegend derart ist, dass die Kupplung in Gegenrichtung belastet wird, so dass eine (nennenswerte) Verdrehung der beiden Leistenteile verhindert wird. Entsprechend verbleiben die beiden Leistenteile im Sammelmodus normalerweise in der Anschlagposition. In der Regel erfolgt im Sammelmodus keine externe Kraftbeaufschlagung des Zubringerhebels, so dass sich dieser gewissermaßen frei bewegen kann. Im Zubringermodus hingegen führt die Fördervorrichtung den ersten Leistenteil wenigstens teilweise mittels des Zubringerhebels, wobei der erste Leistenteil gegenüber dem zweiten Leistenteil verdreht wird. Die entsprechende Verdrehung erfolgt selbstverständlich in der o.g. Verdrehungsrichtung. Das Führen des ersten Leistenteils bezieht sich in diesem Zusammenhang insbesondere auf eine Einstellung der (Schwenk-)Position des ersten Leistenteils bezüglich der Zubringerachse, man könnte auch sagen, auf eine Ausrichtung des ersten Leistenteils.

Erfindungsgemäß werden also die beiden an der Zubringerleiste ansetzenden Hebel, der Zubringer-Sammelhebel und der Zubringerhebel, dazu genutzt, den ersten Leistenteil und somit die Zubringerzinken im Sammelmodus und im Zubringermodus unterschiedlich zu führen bzw. auszurichten. Von besonderer Bedeutung ist dabei die elastische Kopplung der beiden Leistenteile, die ermöglicht, den ersten Leistenteil gegenüber dem zweiten Leistenteil und somit gegenüber dem Zubringer-Sammelhebel zu verdrehen. Der erste Leistenteil kann daher mittels des Zubringerhebels in einer vorgesehenen Weise geführt werden, selbst wenn gleichzeitig durch den Zubringer-Sammelhebel eine andersartige Führung vorgegeben wäre. Dies ermöglicht bspw. in bevorzugter Weise, dass der zweite Leistenteil über den Zubringer-Sammelhebel im Sammelmodus und im Zubringermodus in gleicher Weise geführt wird. Die im Zubringermodus veränderte Bewegungsbahn der Zubringerzinken wird durch die Führung des Zubringerhebels realisiert. Von Vorteil ist insbesondere, dass der Zubringerhebel im Sammelmodus nicht benötigt wird bzw. nicht geführt werden muss, da die Führung in diesem Fall über den Zubringer-Sammelhebel erfolgt.

Bevorzugt ist die Zubringerleiste an einem antreibbaren Leistenträger um die Zubringerachse drehbar gelagert. Hierbei kann die Zubringerleiste über wenigstens ein Drehlager, normalerweise wenigstens zwei Drehlager (insbesondere ein Wälzlager) mit dem Leistenträger verbunden sein. Der Leistenträger ist antreibbar, d.h. durch einen Antrieb bewegbar, wodurch auch die Zubringerachse bewegt wird. Diese bildet wiederum eine Dreh- bzw. Schwenkachse der Zubringerleiste. Die genannte Bewegung des Leistenträgers erfolgt dabei relativ zu einem Rahmen, Gehäuse oder dergleichen der Ballenpresse, an welchem der Leistenträger direkt oder indirekt beweglich gelagert ist. Bevorzugt ist der Leistenträger als Rotorelement ausgebildet, das um eine von der Zubringerachse beabstandete Rotorachse drehend antreibbar ist. In diesem Fall ist die Fördervorrichtung als Rotorförderer ausgebildet. Insbesondere kann das Rotorelement zwei in axialer Richtung beabstandete Trommelscheiben aufweisen, die um eine gemeinsame Rotorachse antreibbar sind. Die Zubringerleiste ist in diesem Fall über jeweils ein Drehlager (insbesondere ein Wälzlager) mit jeder der Trommelscheiben verbunden. Es versteht sich, dass die Zubringerachse in aller Regel parallel zur Rotorachse verläuft.

Eine Ausführungsform sieht vor, dass die Fördervorrichtung dazu eingerichtet ist, den ersten Leistenteil im Sammelmodus durch Zusammenwirken eines Sammel-Führungselements mit dem Zubringer-Sammelhebel zu führen, und ihn im Zubringermodus wenigstens teilweise durch Zusammenwirken eines Zubringer-Führungselements mit dem Zubringerhebel zu führen. D.h., der erste Leistenteil, an welchem die Zubringerzinken angeordnet sind, wird im Sammelmodus mittels des Zubringer-Sammelhebels geführt, wobei ein Sammel-Führungselement der Fördervorrichtung mit dem Zubringer-Sammelhebel zusammenwirkt. Im Zubringermodus hingegen führt die Fördervorrichtung den ersten Leistenteil wenigstens teilweise durch Zusammenwirken eines Zubringer-Führungselements mit dem Zubringerhebel, wobei der erste Leistenteil gegenüber dem zweiten Leistenteil verdreht wird. Die entsprechende Verdrehung erfolgt selbstverständlich in der o.g. Verdrehungsrichtung. Wie bereits oben erwähnt, kann der zweite Leistenteil über den Zubringer-Sammelhebel im Sammelmodus und im Zubringermodus in gleicher Weise geführt werden, so dass das Sammel-Führungselement in beiden Modi gleichartig bewegt werden kann oder die gleiche Position einnehmen kann, also stationär bleiben kann. Die im Zubringermodus veränderte Bewegungsbahn der Zubringerzinken wird durch die Führung des Zubringerhebels mittels des Zubringer-Führungselements realisiert. Besonders vorteilhaft ist dabei, dass der Zubringerhebel und das ihm zugeordnete Zubringer-Führungselement im Sammelmodus nicht benötigt werden, da die Führung in diesem Fall über den Zubringer-Sammelhebel erfolgt. Entsprechend muss das Zubringer-Führungselement nur für einen Modus ausgelegt sein, was seinen Aufbau und/oder seine Ansteuerung vereinfachen kann. Die hier beschriebene Ausführungsform kann mit der drehbaren Anordnung der Zubringerleiste an einem antreibbaren Leistenträger kombiniert werden. In diesem Fall kann das Zusammenwirken des jeweiligen Führungselements mit dem ihm zugeordneten Hebel ganz oder teilweise auf der Bewegung des Zubringerleiste beruhen, wobei der Hebel am (u. U. stationär gehaltenen) Führungselement entlang bewegt wird.

Es wäre denkbar, dass das Sammeln des Erntegutes im Sammelmodus ausschließlich durch die Zubringerzinken einer einzigen Zubringerleiste erfolgt bzw. einer Mehrzahl von Zubringerleisten, die um die Rotorachse herum verteilt sind. Letzteres bedeutet allerdings im Allgemeinen einen unnötigen konstruktiven Aufwand aufgrund der Struktur der Zubringerleiste mit den zwei Leistenteilen, der zwischengeordneten Kupplung sowie den zwei Hebeln. Eine effektive Funktion der Fördervorrichtung im Sammelmodus bei gleichzeitig geringerem konstruktiven Aufwand lässt sich dadurch erreichen, dass die Fördervorrichtung wenigstens eine Sammelleiste aufweist, die um eine Sammelachse drehbar am Rotorelement gelagert ist und eine Mehrzahl von Sammelzinken sowie einen wenigstens im Sammelmodus mit dem Sammel-Führungselement zusammenwirkenden Sammelhebel aufweist. Besonders vorteilhaft bei dieser Ausführungsform ist, dass das Sammel-Führungselement zur Führung sowohl der Sammelleiste(n) als auch des zweiten Leistenteils der Zubringerleiste genutzt wird. Normalerweise ist vorgesehen, dass die Sammelzinken und der Sammelhebel bezogen auf die Sammelachse drehfest verbunden sind, wobei auch wenigstens ein Sammelzinken einstückig mit dem Sammelhebel ausgebildet sein kann. Die jeweilige Sammelachse verläuft in aller Regel parallel zur Rotorachse sowie zur Zubringerachse. Der Abstand der Sammelachse von der Rotorachse kann insbesondere gleich dem Abstand der Zubringerachse von der Rotorachse sein. Es können eine Mehrzahl von Sammelleisten um die Rotorachse herum verteilt sein. Gemäß einer typischen Ausgestaltung weist die Fördervorrichtung genau eine Zubringerleiste sowie zusätzlich zwei bis fünf, insbesondere drei oder vier, Sammelleisten auf. Es sind allerdings im Rahmen der Erfindung auch ausdrücklich andere Anzahlen möglich. Bevorzugt wirkt der Sammelhebel auch im Zubringermodus mit dem Sammel-Führungselement zusammen.

Bevorzugt ist die Kupplung wenigstens teilweise innerhalb des ersten Leistenteils aufgenommen. D.h., der erste Leistenteil ist wenigstens abschnittsweise hohl ausgebildet, bspw. als Rohr, und weist einen Innenraum auf, in dem die Kupplung ganz oder teilweise aufgenommen ist. Auf diese Weise kann die Kupplung vor mechanischer Beschädigung und vor Verschmutzung geschützt werden, was einen störungsfreien Betrieb der Fördervorrichtung begünstigt.

Vorteilhaft weist die Kupplung ein drehfest mit dem ersten Leistenteil verbundenes erstes Kupplungsteil auf sowie ein drehfest mit dem zweiten Leistenteil verbundenes zweites Kupplungsteil, wobei die Kupplungsteile in der Anschlagposition wenigstens indirekt einen tangentialen Formschluss miteinander bilden, sowie wenigstens ein elastisches Federelement, das wenigstens indirekt kraftübertragend mit beiden Leistenteilen verbunden ist. Dabei ist es auch möglich, dass das erste Kupplungsteil einstückig mit dem ersten Leistenteil ausgebildet ist und/oder das zweite Kupplungsteil einstückig mit dem zweiten Leistenteil ausgebildet ist. In der Anschlagposition bilden die beiden Kupplungsteile in tangentialer Richtung (bezüglich der Zubringerachse) entweder direkt einen Formschluss, so dass sie unmittelbar aneinander an liegen, oder über wenigstens ein in tangentialer Richtung zwischengeordnetes Element. In jedem Fall wirkt die Kupplung auf diese Weise als Anschlag, der eine Verdrehung in Gegenrichtung verhindert. Der entsprechende Anschlag kann über ein bspw. elastomeres Dämpferelement verfügen, das beim plötzlichen Zurückstellen in die Anschlagposition verhindert, dass die Kupplungsteile aneinanderschlagen, was eine unerwünschte Geräuschentwicklung oder einen vorzeitigen Verschleiß bedeuten könnte. Weiterhin weist die Kupplung ein elastisches Federelement auf, das entweder direkt oder indirekt kraftübertragend mit dem ersten Leistenteil sowie mit dem zweiten Leistenteil verbunden ist. Es versteht sich, dass das wenigstens eine Federelement derart mit den Leistenteilen verbunden ist, dass es bei einer Verdrehung in die Verdrehungsrichtung elastisch verformt wird, so dass das oben erwähnte Rückstellmoment erzeugt wird. Insbesondere kann wenigstens ein Federelement direkt mit einem Kupplungsteil verbunden sein.

Um die gewünschte Wirkung der Kupplung zu erzeugen, sind unterschiedlichste technische Ausgestaltungen denkbar. Die elastische Verformung des Federelements kann insbesondere einer Stauchung, Streckung, Biegung und/oder einer Torsion entsprechen. Das Federelement kann bspw. aus einem elastomeren Material (z.B. Gummi), aus faserverstärktem Kunststoff oder aus Federstahl bestehen. Je nach Anwendung können unterschiedliche Federgeometrien eingesetzt werden. Als besonders vorteilhaft hat es sich herausgestellt, dass wenigstens ein Federelement als Torsionsfeder ausgebildet ist. Die Torsionsfeder kann dabei als Schraubenfeder ausgebildet sein, die entlang der Zubringerachse ausgerichtet ist und die einerseits direkt oder indirekt mit dem ersten Leistenteil und andererseits direkt oder indirekt mit dem zweiten Leistenteil verbunden ist.

Gemäß einer Ausgestaltung der Erfindung weist der zweite Leistenteil eine axial verlaufende Welle auf, die wenigstens überwiegend innerhalb des ersten Leistenteils angeordnet ist. Die entsprechende Welle ist in aller Regel symmetrisch zur Zubringerachse angeordnet und ist normalerweise endseitig direkt oder indirekt drehfest mit dem Zubringerhebel verbunden. Normalerweise ist die Welle einstückig ausgebildet, allerdings könnte sie auch aus mehreren, drehfest verbundenen Teilen bestehen. Sie kann innerhalb des ersten Leistenteils durch ein oder mehrere Drehlager, insbesondere Wälzlager, drehbar gelagert sein. Außerdem kann das oben erwähnte zweite Kupplungsteil drehfest mit der Welle verbunden sein. Auch eine oben erwähnte Torsionsfeder kann direkt oder zumindest indirekt mit der Welle verbunden sein. Eine entsprechende Welle gewährleistet bei ausreichender Länge eine stabile Verbindung der beiden Leistenteile, während gleichzeitig die Welle selbst sowie zwischen ihr und dem ersten Leistenteil zwischengeordnete Drehlager kompakt innerhalb des ersten Leistenteils untergebracht und gleichzeitig vor Beschädigung und Verschmutzung geschützt sind.

Eine Ausgestaltung der Erfindung sieht vor, dass das Zubringer-Führungselement dazu ausgebildet ist, im Zubringermodus nur zeitweise mit dem Zubringerhebel zusammenzuwirken, so dass der erste Leistenteil zwischenzeitlich durch Zusammenwirken des Sammel-Führungselements mit dem Zubringer-Sammelhebel geführt ist. D.h. während des Sammelmodus ist der Zubringerhebel nur zeitweise mit dem Zubringer-Führungselement in Kontakt, während er zwischenzeitlich freigegeben wird. In dieser Zeit wird der erste Leistenteil durch das Zusammenwirken des Sammel-Führungselements mit dem Zubringer-Sammelhebel geführt. Soweit keine Krafteinwirkung auf den Zubringerhebel erfolgt, bewirkt die Kupplung dabei eine Rückstellung der Leistenteile in die Anschlagposition. Z.B. kann bei einem drehbaren Leistenträger, bei welchem die Zubringerachse die Rotorachse umläuft, das Zubringer-Führungselement nur bei einem Teil der Umlaufbewegung, z.B. höchstens 270° oder höchstens 180°, mit dem Zubringerhebel in Kontakt sein. Da das Zubringer-Führungselement nur einen Teil der Bewegung führen muss, kann es u.U. materialsparender und leichter ausgebildet sein.

Eine bevorzugte Ausführungsform der Erfindung sieht vor, dass das Sammel-Führungselement wenigstens eine Sammel-Kurvenbahn aufweist, mit welcher der Zubringer-Sammelhebel wenigstens im Sammelmodus mittels wenigstens eines von der Zubringerachse beabstandeten Sammel-Eingriffselements eingreift, und das Zubringer-Führungselement wenigstens eine Zubringer-Kurvenbahn aufweist, mit welcher der Zubringerhebel im Zubringermodus mittels wenigstens eines von der Zubringerachse beabstandeten Zubringer-Eingriffselements eingreift. Die Sammel- bzw. Zubringer-Kurvenbahn weist eine Form auf, die wenigstens einseitig, ggf. auch beidseitig einen Formschluss mit dem Sammel- bzw. Zubringer-Eingriffselement bildet, so dass das Eingriffselement entlang der Kurvenbahn geführt ist. Die Kurvenbahn kann dabei ein Führungsprofil oder eine Führungsschiene bilden, mit welcher das Eingriffselement zusammenwirkt. Das Sammel- bzw. Zubringer-Führungselement weist wenigstens eine Sammel- bzw. Zubringer-Kurvenbahn auf, was die Möglichkeit einschließt, dass das Führungselement als Kurvenbahn ausgebildet ist. Wenngleich hier von "einem" Eingriffselement sowie "einer" Kurvenbahn die Rede ist, ist es denkbar, dass der Zubringer-Sammelhebel bzw. der Zubringerhebel wenigstens zwei Sammel- bzw. Zubringer-Eingriffselemente aufweist und/oder das wenigstens zwei Sammel- bzw. Zubringer-Kurvenbahnen vorgesehen sind. Auch ist es möglich, dass wenigstens eine Kurvenbahn aus einer Mehrzahl von zueinander beabstandeten Abschnitten besteht bzw. unterbrochen, also nichtdurchgehend ausgebildet ist. Der Begriff "Kurvenbahn" ist nicht dahingehend auszulegen, dass die Form der entsprechenden Bahn durchgehend gekrümmt ist. Vielmehr kann sie bereichsweise auch gerade sowie ggf. abgewinkelt ausgebildet sein.

Die Bewegung des Führungselements an der ihm zugeordneten Kurvenbahn sollte einerseits eine sichere, wohldefinierte Führung des entsprechenden Hebels ermöglichen, andererseits aber auch möglichst reibungsarm erfolgen, um den Energieaufwand und den Verschleiß zu minimieren. Aus diesen Gründen ist es bevorzugt, dass wenigstens ein Führungselement als drehbar gelagerte Laufrolle ausgebildet ist. Im Falle des Sammel-Eingriffselements kann man von einer Sammellaufrolle sprechen, die am Zubringer-Sammelhebel drehbar gelagert ist, und im Falle eines Zubringer-Eingriffselements von einer Zubringerlaufrolle, die am Zubringerhebel drehbar gelagert ist.

Besonders bevorzugt ist die Sammel-Kurvenbahn im Sammelmodus und im Zubringermodus in der gleichen Position angeordnet, so dass der zweite Leistenteil durch die Sammel-Kurvenbahn mittels des Zubringer-Sammelhebels im Sammelmodus wie im Zubringermodus geführt ist. D.h., die Sammel-Kurvenbahn kann innerhalb der Ballenpresse, bspw. an einem Gehäuse der Fördervorrichtung, stationär montiert sein und bleibt somit unabhängig vom Modus in der gleichen Position. Die Führung des zweiten Leistenteils ist somit auch identisch. Ohne die Einwirkung auf den Zubringerhebel würden sich die Zubringerzinken daher im Sammelmodus und im Zubringermodus in gleicher Weise bewegen. Wie oben erläutert, wird allerdings durch die Führung des Zubringerhebels und die Verdrehung der beiden Leistenteile gegeneinander eine geeignete Bewegungsbahn der Zubringerzinken erzeugt.

Dabei ist es bevorzugt, dass die Zubringer-Kurvenbahn im Sammelmodus in einer Sammelposition angeordnet ist, in welcher das Zubringer-Eingriffselement mit ihr außer Eingriff gehalten ist, und im Zubringermodus in eine Zubringerposition verstellt ist, in welcher das Zubringer-Eingriffselement mit ihr in Eingriff bringbar ist. Dabei ist sowohl die Sammelposition als auch die Zubringerposition jeweils stationär, d.h. abgesehen von einer unvermeidlichen Übergangsphase beim Verstellen zwischen den beiden Positionen, wird die Zubringer-Kurvenbahn innerhalb des jeweiligen Modus stationär gehalten. Dies vereinfacht selbstverständlich die Steuerung der Zubringer-Kurvenbahn erheblich. Der Wechsel zwischen Zubringermodus und Sammelmodus kann bspw. erfolgen, während sich die Zubringerzinken nicht in Eingriff mit dem Erntegut befinden. In der Sammelposition ist die Zubringer-Kurvenbahn nicht in Eingriff mit dem Zubringer-Eingriffselement, so dass im Wesentlichen keine äußeren Kräfte auf den Zubringerhebel einwirken. Entsprechend erfolgt die Führung des ersten Leistenteils über den Zubringer-Sammelhebel und die zwischengeordnete Kupplung. In der Zubringerposition hingegen ist die Zubringer-Kurvenbahn wenigstens zeitweise in Eingriff mit dem Zubringer-Eingriffselement, so dass die Führung des ersten Leistenteils wenigstens zeitweise über den Zubringerhebel erfolgt.

Gemäß einer Ausführungsform kann die Zubringer-Kurvenbahn bspw. in axialer Richtung zwischen der Sammelposition und der Zubringer Position verschiebbar sein. Im Allgemeinen ist es allerdings konstruktiv einfacher, wenn die Zubringer-Kurvenbahn zwischen der Sammelposition und der Zubringerposition verschwenkbar ist. Sie kann dabei um eine Kurvenbahnachse schwenkbar an einem Gehäuse der Fördervorrichtung gelagert sein, wobei die entsprechende Kurvenbahnachse insbesondere axial, also parallel zur Zubringerachse, verlaufen kann.

Wie bereits oben erwähnt, kann die Fördervorrichtung einen die Sammelkammer gegenüber der Presskammer abgrenzenden Rückhalter aufweisen. Gemäß einer bevorzugten Ausgestaltung ist durch eine Steuereinrichtung ein Wechsel vom Sammelmodus zum Zubringermodus in Abhängigkeit von einer Einwirkung des Ernteguts auf den Rückhalter auslösbar. Im einfachsten Fall könnte die Steuereinrichtung rein mechanisch ausgebildet sein und somit eine mechanische Verbindung zwischen dem Rückhalter und demjenigen Element herstellen, welches die Führung des Zubringerhebels bewirkt. Normalerweise ist allerdings ein Sensor vorgesehen, der die Einwirkung des Erntegutes auf den Rückhalter misst und in Abhängigkeit hiervon einen Aktor auslöst, der die Umschaltung in den Zubringermodus bewirkt. Die Einwirkung des Erntegutes auf den Rückhalter könnte bspw. in einer Beaufschlagung des Rückhalters durch eine Kraft bzw. ein Drehmoment bestehen. Insbesondere kann sie aber in einer Auslenkung des Rückhalters durch das anstehende Erntegut bestehen. Insofern, als bei dieser Ausführungsform der Rückhalter eine sensorische Funktion übernimmt, kann er zumindest in einigen Ausführungsformen auch als Tastschwinge bezeichnet werden. Alternativ zu einer Einwirkung des Erntegutes auf den Rückhalter könnte bspw. auch eine auf die Zubringerzinken und/oder die Sammelzinken wirkende Kraft bzw. ein Drehmoment gemessen werden. Wenn das entsprechende Drehmoment über einen bestimmten Schwellwert steigt, kann davon ausgegangen werden, dass ein ausreichender Füllungsgrad der Sammelkammer gegeben ist.

Die Aufgabe wird weiterhin gelöst mit einer Zubringerleiste für eine Fördervorrichtung einer Ballenpresse, mit den Merkmalen des unabhängigen Patentanspruchs 16, welche Zubringerleiste sich entlang einer axialen Zubringerachse erstreckt und einen ersten Leistenteil mit einer Mehrzahl von Zubringerzinken sowie einem Zubringerhebel aufweist, wobei die Zubringerleiste dazu vorgesehen ist, in einem Sammelmodus mittels der Zubringerzinken Erntegut innerhalb einer Sammelkammer in Richtung auf eine Presskammer zu fördern, und in einem Zubringermodus mittels der Zubringerzinken Erntegut aus der Sammelkammer in die Presskammer zu fördern.

Erfindungsgemäß weist die Zubringerleiste einen zweiten Leistenteil mit einem Zubringer-Sammelhebel auf, wobei die Leistenteile um die Zubringerachse gegeneinander verdrehbar und durch eine Kupplung derart verbunden sind, dass sie, ausgehend von einer Anschlagposition, in einer Verdrehungsrichtung rückstellend gegeneinander verdrehbar und in Gegenrichtung verdrehungshindernd gekoppelt sind, wobei der erste Leistenteil im Sammelmodus mittels des Zubringer-Sammelhebels und durch Kraftübertragung über die Kupplung führbar ist, und im Zubringermodus wenigstens teilweise mittels des Zubringerhebels, unter Verdrehung gegenüber dem zweiten Leistenteil, führbar ist.

Die genannten Begriffe wurden bereits oben mit Bezug auf die erfindungsgemäße Fördervorrichtung erläutert und werden daher nicht nochmals erklärt. Vorteilhafte Ausgestaltungen der erfindungsgemäßen Zubringerleiste entsprechen denen der erfindungsgemäßen Fördervorrichtung.

Die Aufgabe wird zudem gelöst mit einer Ballenpresse mit den Merkmalen des unabhängigen Patentanspruchs 17. Die Ballenpresse weist eine Sammelkammer, eine Presskammer sowie eine Fördervorrichtung auf, mit einer sich entlang einer axialen Zubringerachse erstreckenden Zubringerleiste, die einen ersten Leistenteil mit einer Mehrzahl von Zubringerzinken sowie einem Zubringerhebel aufweist, wobei die Fördervorrichtung dazu eingerichtet ist, in einem Sammelmodus mittels der Zubringerzinken Erntegut innerhalb der Sammelkammer in Richtung auf die Presskammer zu fördern, und in einem Zubringermodus mittels der Zubringerzinken Erntegut aus der Sammelkammer in die Presskammer zu fördern.

Erfindungsgemäß weist die Zubringerleiste einen zweiten Leistenteil mit einem Zubringer-Sammelhebel auf, wobei die Leistenteile um die Zubringerachse gegeneinander verdrehbar und durch eine Kupplung derart verbunden sind, dass sie, ausgehend von einer Anschlagposition, in einer Verdrehungsrichtung rückstellend gegeneinander verdrehbar und in Gegenrichtung verdrehungshindernd gekoppelt sind, wobei die Fördervorrichtung dazu eingerichtet ist, den ersten Leistenteil im Sammelmodus mittels des Zubringer-Sammelhebels und durch Kraftübertragung über die Kupplung zu führen, und ihn im Zubringermodus wenigstens teilweise mittels des Zubringerhebels, unter Verdrehung gegenüber dem zweiten Leistenteil, zu führen.

Die genannten Begriffe wurden bereits oben mit Bezug auf die erfindungsgemäße Fördervorrichtung erläutert und werden daher nicht nochmals erklärt. Vorteilhafte Ausgestaltungen der erfindungsgemäßen Ballenpresse entsprechen denen der erfindungsgemäßen Fördervorrichtung.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Schnittdarstellung einer Ballenpresse gemäß dem Stand der Technik;
- Fig. 2: eine erste perspektivische Darstellung eines Teils einer Ballenpresse mit einer erfindungsgemäßen Fördervorrichtung in einem Sammelmodus;
- Fig. 3: eine perspektivische Darstellung einer Zubringerleiste der Fördervorrichtung aus Fig. 2;
- Fig. 4: zwei Schnittdarstellungen der Zubringerleiste aus Fig. 3;
- Fig. 5: eine zweite perspektivische Darstellung eines Teils einer Ballenpresse mit der Fördervorrichtung aus Fig. 2 in einem Zubringermodus;
- Fig. 6a: eine dritte perspektivische Darstellung eines Teils einer Ballenpresse mit der Fördervorrichtung aus Fig. 2 im Zubringermodus; sowie
- Fig. 6b: eine vierte perspektivische Darstellung eines Teils einer Ballenpresse mit der Fördervorrichtung aus Fig. 2 im Sammelmodus.

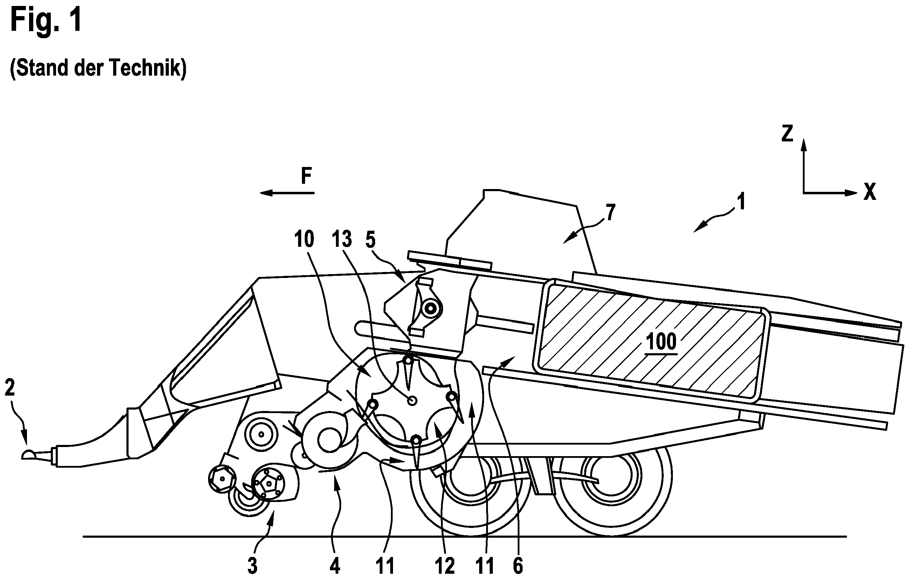

Fig. 1 zeigt eine Ballenpresse, genauer gesagt eine Quaderballenpresse 1, gemäß dem Stand der Technik. Die Quaderballenpresse 1 ist in bekannter Weise dazu vorgesehen, von einer Zugmaschine bzw. einem Traktor (nicht dargestellt) gezogen zu werden, wozu sie in Fahrtrichtung F vorderseitig eine Anhängerkupplung 2 aufweist. Die Erfindung ist aber nicht auf gezogene oder getragene Ballenpressen beschränkt, sondern bezieht sich auch auf selbstfahrende Ballenpressen. Auch lässt sich die Erfindung nicht nur auf Quaderballenpressen 1 anwenden, sondern auch bspw. auf Rundballenpressen. Bezogen auf die Fahrtrichtung F vorderseitig ist eine Aufnahmevorrichtung bzw. Pick-up 3 erkennbar, die im Betrieb (bezogen auf Fig. 1) im Uhrzeigersinn rotiert und dazu dient, Erntegut, genauer gesagt Halmgut wie Stroh, Heu oder Gras, vom Boden aufzunehmen. Von der Pick-up 3 gelangt das Erntegut zu einer Schneidvorrichtung 4, die entgegen dem Uhrzeigersinn rotiert. Sie weist eine Mehrzahl von Zinken auf, die das Erntegut ergreifen und weiter entgegen der Fahrtrichtung F und leicht aufwärts zu einer Sammelkammer 11 transportieren, die auch als Sammelkanal bezeichnet werden kann. Anstelle der Schneidvorrichtung 4 könnte auch eine Fördervorrichtung eingesetzt werden, die das Erntegut nur fördert und nicht zerkleinert. Unter Umständen könnte die Schneidvorrichtung 4 auch ersatzlos entfallen.

Innerhalb der Sammelkammer 11 wird das Erntegut von einer als Rotorförderer ausgebildeten Fördervorrichtung 10 erfasst, welche auch als Sammelvorrichtung, Förder- und Sammelvorrichtung, Raffervorrichtung oder Gutraffer bezeichnet werden kann. Durch die Fördervorrichtung 10 wird das Erntegut innerhalb der Sammelkammer 11 gegen den Uhrzeigersinn gefördert, zunächst entlang einer Längsachse X (entgegen der Fahrtrichtung F) nach hinten sowie im weiteren Verlauf entlang einer Hochachse Z aufwärts in Richtung auf eine Presskammer 6. Zu diesem Zweck weist die Fördervorrichtung 10 eine Mehrzahl von Rechen bzw. Leisten (in Fig. 1 nicht bezeichnet) auf, die mit ihren Zinken auf das Erntegut einwirken. Die Leisten sind jeweils schwenkbar an einer als Leistenträger dienenden Rotoreinheit 12 gelagert, die ihrerseits über eine Rotorwelle 13 rotierend antreibbar ist. Die Fördervorrichtung 10 bewirkt dabei zum einen eine Förderung des Erntegutes innerhalb der Sammelkammer 11, zum anderen auch eine Vorverdichtung gegen einen (in Fig. 1 nicht dargestellten) Rückhalter 70. Bei ausreichender Verdichtung des Erntegutes wird dieses aus der Sammelkammer 11 in die Presskammer 6 gefördert, wobei der Rückhalter 70 den Weg freigibt. Die Presskammer 6 gehört zu einer Presseinheit 5, welche weiterhin einen Presskolben (nicht bezeichnet) umfasst, der in der Presskammer 6 oszillierend hin und her bewegt wird, um das in der Presskammer 6 angesammelte Erntegut zu einem Quaderballen 100 zu pressen. Oberhalb der Presskammer 6 ist eine Bindeeinheit 7 angeordnet, in der Bindematerial (nicht gezeigt) zum Binden des fertigen Quaderballens 100 vorgehalten ist. Die Vorverdichtung des Erntegutes einerseits sowie das Ausfördern von der Sammelkammer 11 in die Presskammer 6 andererseits erfordern eine jeweils unterschiedliche Bewegung der Leisten, wobei man im ersteren Fall von einem Sammelmodus der Fördervorrichtung 10 sowie im letzteren Fall von einem Zubringermodus sprechen kann.

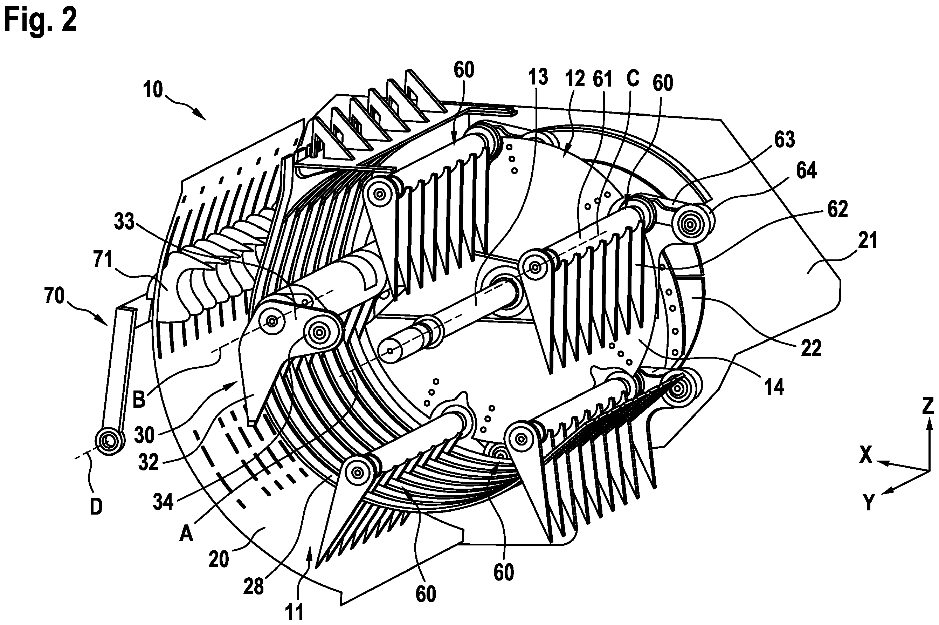

Mit Bezug auf Fig. 2 bis 6b wird nun eine erfindungsgemäße Fördervorrichtung 10 erläutert, welche mit einer möglichst einfach gehaltenen Mechanik ein sicheres Umschalten zwischen dem Sammelmodus und dem Zubringermodus ermöglicht. Wie bspw. in Fig. 2 erkennbar ist, ist die Rotoreinheit 12 durch eine Mehrzahl von Abstreifern 28 von der Sammelkammer 11 getrennt, welche auf einer den Abstreifern 28 gegenüberliegenden Seite durch einen Boden 20 begrenzt ist. Entlang einer Querachse Y beiderseits der Rotoreinheit 12 sind zwei Seitenwände 21, 23 mit dem Boden 20 verbunden und begrenzen die Sammelkammer 11 seitlich. Der Rückhalter 70 ist um eine Rückhalterachse D schwenkbar gelagert und kann mit einer Mehrzahl von Rückhalterblechen 71 durch Schlitze im Boden 20 in die Sammelkammer 11 eingreifen.

Die Rotoreinheit 12 weist wie erwähnt eine Rotorwelle 13 auf, die um eine Rotorachse A rotierend antreibbar ist. Zwei Trommelscheiben 14 (von denen nur eine dargestellt ist) sind drehfest mit der Rotorwelle 13 verbunden. Eine Mehrzahl von Leisten 30, 60 ist jeweils frei schwenkbar mit beiden Trommelscheiben 14 verbunden. Im vorliegenden Fall sind insgesamt vier Sammelleisten 60 vorgesehen, von denen jede eine Sammelwelle 61 aufweist, die um eine Sammelachse C drehbar bzw. schwenkbar ist. Eine Mehrzahl von Sammelzinken 62 ist an der Sammelwelle 61 angeschweißt. Außerdem ist ein Zubringer-Sammelhebel 63 drehfest mit der Sammelwelle 61 verbunden, der mittels zweier Sammellaufrollen 64 (von denen nur eine sichtbar ist) mit einer Sammel-Kurvenbahn 22 zusammenwirkt, die stationär an einer ersten Seitenwand 21 montiert ist. Die Sammel-Kurvenbahn 22 fungiert dabei als Sammel-Führungselement. Durch das Zusammenwirken von Sammel-Kurvenbahn 22 und Zubringer-Sammelhebel 63 werden die Sammelleisten 60 beim Umlauf um die Rotorachse A geführt, d.h. ihre Ausrichtung bezüglich der Sammelachse C wird gesteuert. Während des Umlaufs tauchen die Sammelzinken 62 durch Lücken zwischen den Abstreifern 28 in die Sammelkammer 11 und stechen in das Erntegut ein, um dieses zu fördern. Aufgrund der stationären Anordnung der Sammel-Kurvenbahn 22 ist die Bewegungsbahn der Sammelzinken 62 stets gleich, d.h. sie bewegen sich im Zuge einer Umdrehung in gleicher Weise, unabhängig davon, ob die Fördervorrichtung 10 im Sammelmodus oder im Zubringermodus ist.

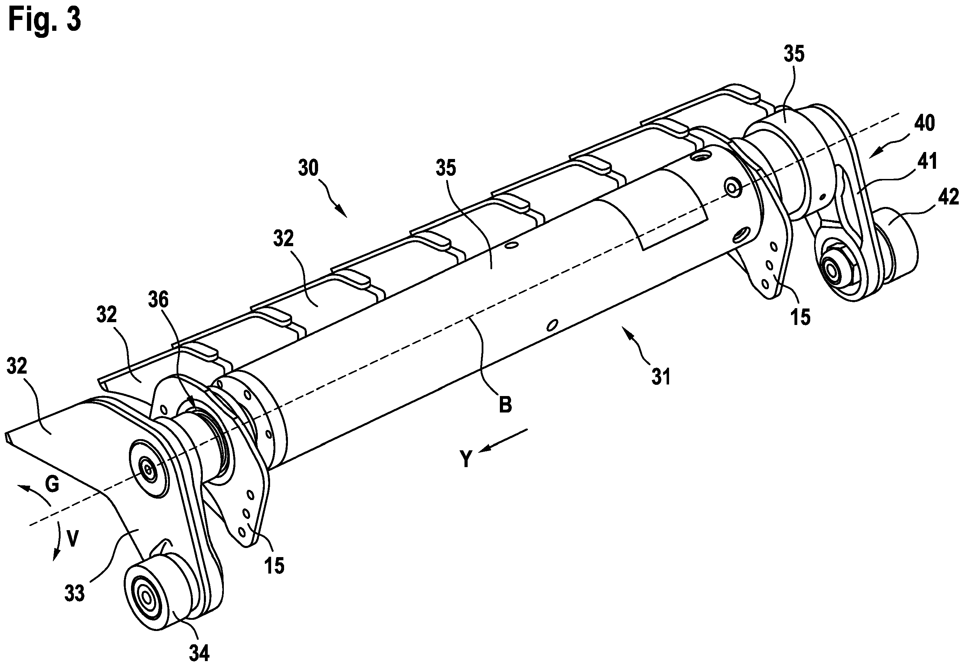

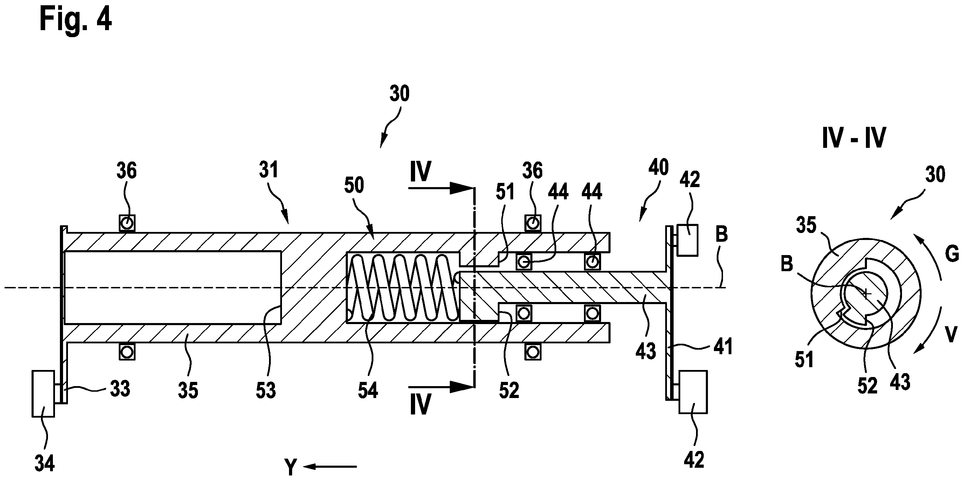

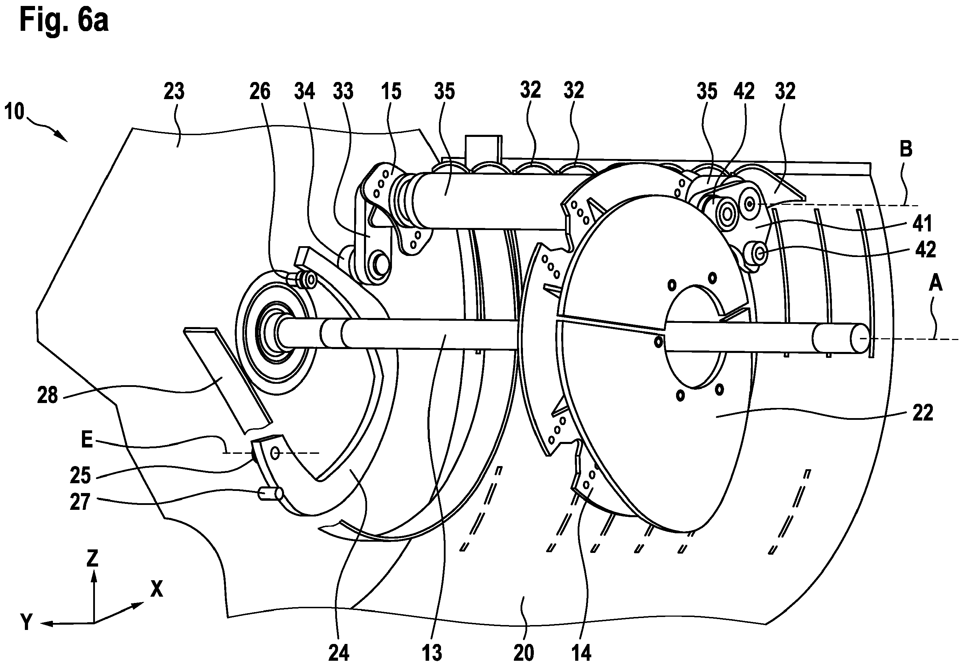

Zusätzlich zu den Sammelleisten 60 weist die Fördervorrichtung 10 eine Zubringerleiste 30 auf. Diese ist um eine Zubringerachse B schwenkbar an den Trommelscheiben 14 gelagert. Die Zubringerachse B definiert eine axiale Richtung, die parallel zur Querachse Y verläuft. Wie in Fig. 3 und 4 erkennbar ist, weist die Zubringerleiste 30 eine Mehrzahl von Zubringerzinken 32 auf sowie einen hierzu drehfest angeordneten Zubringerhebel 33, der in diesem Fall einstückig mit einem der Zubringerzinken 32 ausgebildet ist. An dem Zubringerhebel 33 ist eine Zubringerlaufrolle 34 gelagert, deren Funktion nachfolgend noch erläutert wird. Die meisten der Zubringerzinken 32 sind drehfest mit einer Hohlwelle 35 verbunden, die aus konstruktiven Gründen eine mehrteilige Struktur aufweist, welche hier nicht im Detail erläutert wird. Die Zubringerzinken 32, der Zubringerhebel 33 sowie die Hohlwelle 35 gehören zu einem ersten Leistenteil 31 der Zubringerleiste 30. Die Zubringerleiste 30 weist außerdem einen zweiten Leistenteil 40 mit einem Zubringer-Sammelhebel 41 auf, an dem zwei Zubringer-Sammellaufrollen 42 (erkennbar in Fig.4 und 6a) drehbar gelagert sind.

Der erste Leistenteil 31 und der zweite Leistenteil 40 sind um die Zubringerachse B gegeneinander verdrehbar. Zu diesem Zweck ist eine Welle 43 des zweiten Leistenteils 40 über zwei Wälzlager 44 innerhalb der Hohlwelle 35 gelagert. Dies ist in Fig. 4 erkennbar, die einerseits eine Schnittdarstellung parallel zur Zubringerachse B sowie andererseits eine Schnittdarstellung senkrecht zur Zubringerachse B entsprechend der Linie IV-IV zeigt. Darüber hinaus ist eine Kupplung 50 zwischen den Leistenteilen 31, 40 zwischengeordnet. Diese weist als erstes Kupplungsteil einen drehfest mit der Hohlwelle 35 verbundenen Anschlag 51 auf sowie als zweites Kupplungsteil einen drehfest mit der Welle 43 verbundenen Mitnehmer 52. Des Weiteren ist eine als Schraubenfeder ausgebildete Torsionsfeder 54 einerseits mit der Welle 43 bzw. dem Mitnehmer 52 verbunden sowie andererseits mit einem drehfest innerhalb der Hohlwelle 35 angeordneten Einsatz 53.

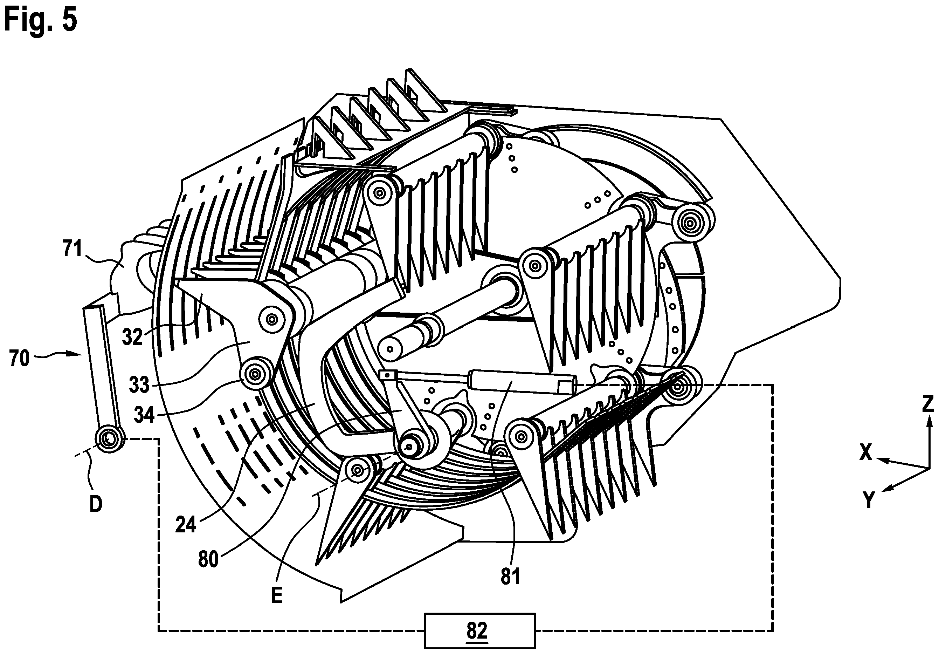

Fig. 4 zeigt die beiden Leistenteile 31, 40 in einer Anschlagposition, in welcher der Anschlag 51 sowie der Mitnehmer 52 einen Formschluss in tangentialer Richtung bilden, so dass der erste Leistenteil 31 zwar in einer Verdrehungsrichtung V, nicht jedoch in einer Gegenrichtung G, gegenüber dem zweiten Leistenteil 40 verdrehbar ist. Optional kann zwischen dem Anschlag 51 und dem Mitnehmer 52 ein Puffer aus elastomeren Material zwischengeordnet sein. Aufgrund der als elastisches Federelement dienenden Torsionsfeder 54 wirkt bei einer Verdrehung in der Verdrehungsrichtung V ein rückstellendes Drehmoment in Richtung auf die Anschlagposition. Die Zubringerleiste 30 ist insgesamt über zwei Wälzlager 36 an den (hier nicht dargestellten) Trommelscheiben 14 gelagert, wobei die Verbindung zu den Trommelscheiben 14 über je eine Verbindungsplatte 15 gegeben ist, die eines der Wälzlager 36 aufnimmt. In Fig. 2 und 5 sind die Verbindungsplatten 15 aus Gründen der Übersichtlichkeit weggelassen. Der Zubringer-Sammelhebel 41 ist im Wesentlichen identisch ausgestaltet wie die Zubringer-Sammelhebel 63 der Sammelleisten 60. Er wirkt über die Zubringer-Sammellaufrollen 42 genauso mit der Sammel-Kurvenbahn 22 zusammen wie die Zubringer-Sammelhebel 63. Somit werden beim Umlaufen der Zubringerleiste 30 um die Rotorachse A der Zubringer-Sammelhebel 41 und der zweite Leistenteil 40 insgesamt immer gleichbleibend durch die stationäre Sammel-Kurvenbahn 22 geführt.

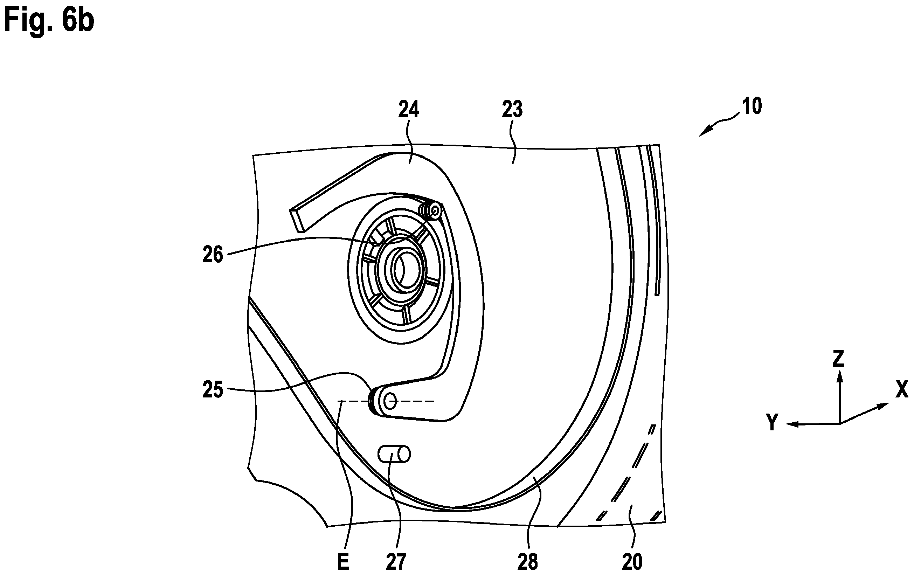

Aufgrund der Wirkung der Kupplung 50 verbleiben die beiden Leistenteile 31, 40 im Wesentlichen in der Anschlagposition, solange keine äußere Kraft bzw. kein äußeres Drehmoment auf den Zubringerhebel 33 wirkt. Eine Steuerung des Zubringerhebels 33 kann über eine in Fig. 5, 6a sowie 6b erkennbare Zubringer-Kurvenbahn 24 erfolgen, die schwenkbar an einer zweiten Seitenwand 23 angeordnet ist. Genauer gesagt, ist sie auf einer Kurvenbahnwelle 25 montiert, die um eine zur Rotorachse A parallele Kurvenbahnachse E schwenkbar ist. Zur besseren Führung der Zubringer-Kurvenbahn 24 ist außerdem eine Kurvenbahnlaufrolle 26 vorgesehen. Ein an der zweiten Seitenwand 23 befestigter Anschlag 27 definiert dabei außerdem eine in Fig. 5 sowie 6a dargestellte Zubringerposition der Zubringer-Kurvenbahn 24. Durch ein Verschwenken um die Kurvenbahnachse E gelangt die Zubringer-Kurvenbahn 24 in eine in Fig. 6b dargestellte Sammlerposition.

In der Sammlerposition ist die Zubringer-Kurvenbahn 24 insgesamt so dicht an der Rotorachse A angeordnet, dass die Zubringerlaufrolle 34 zu keinem Zeitpunkt mit ihr in Eingriff gelangt. Es wirkt somit kein äußeres Drehmoment auf den Zubringerhebel 33, so dass die Zubringerleiste 30 insgesamt durch das Zusammenwirken der Sammel-Kurvenbahn 22 und des Zubringer-Sammelhebels 41 geführt wird. Wie bereits erläutert, bleiben die beiden Leistenteile 31, 40 dabei in der Anschlagposition. Die Bewegungsbahn der Zubringerzinken 32 entspricht dabei in etwa derjenigen der Sammelzinken 62. Die in Fig.2 dargestellte Position der Zubringerzinken 32 entspricht dem Sammelmodus.

Die Schwenkbewegung der Zubringer-Kurvenbahn 24 wird über einen Schalthebel 80 sowie einen hieran angreifenden Hydraulikzylinder 81 gesteuert. Der Hydraulikzylinder 81 wiederum ist mit einer Steuervorrichtung 82 verbunden, die ihrerseits über einen geeigneten Drehwinkelsensor die Auslenkung des Rückhalters 70 um die Rückhalterachse D registriert. Der Schalthebel 80, der Hydraulikzylinder 81 sowie die Steuervorrichtung 82 sind in Fig. 5 dargestellt, wobei die zweite Seitenwand 23 aus Darstellungsgründen weggelassen wurde. Wenn der Rückhalter 70 durch die Einwirkung von vorverdichtetem Erntegut auf die Rückhalterbleche 71 um einen vorgegebenen Winkel ausgelenkt wird, wird dies von der Steuervorrichtung 82 registriert und diese verstellt mittels des Hydraulikzylinders 81 die Zubringer-Kurvenbahn 24 in die in Fig. 6a gezeigte Zubringerposition.

In dieser Zubringerposition ist die Zubringer-Kurvenbahn 24 wenigstens teilweise so weit von der Rotorachse A beabstandet, dass die Zubringerlaufrolle 34 des Zubringerhebels 33 während eines Teils des Umlaufs mit ihr in Eingriff kommt. Dies führt zu einer elastischen Verdrehung des ersten Leistenteils 31 gegenüber dem zweiten Leistenteil 40, welches in gleichbleibender Weise durch die Sammel-Kurvenbahn 22 geführt wird. Durch die Verdrehung der Leistenteile 31, 40 ändert sich die Bewegungsbahn der Zubringerzinken 32 derart, dass sie im Gegensatz zu den Sammelzinken 62 über einen größeren Teil der Umlaufbahn der Zubringerleiste 30 in der Sammelkammer 11 verbleiben und somit das Erntegut nach oben aus der Sammelkammer 11 in die Presskammer 6 fördern, wie in Fig. 5 angedeutet ist. Die entsprechende Änderung der Bewegungsbahn der Zubringerzinken 32 betrifft dabei nur einen Teil des Umlaufs der Zubringerleiste 30, weshalb sich die Zubringer-Kurvenbahn 24 effektiv nur über einen Winkelbereich von weniger als 180° um die Rotorachse A erstreckt. Außerhalb dieses Winkelbereichs ist keine Führung des Zubringerhebels 33 gegeben. Dieser wird durch die Wirkung der Torsionsfeder 54 zusammen mit dem restlichen ersten Leistenteil 31 zurück in die Anschlagposition geführt, wodurch sich die Zubringerzinken 32 für den Rest des Umlaufs ähnlich wie die Sammelzinken 62 bewegen, bis die Zubringerlaufrolle 34 wieder in Eingriff mit der Zubringer-Kurvenbahn 24 kommt und eine erneute Verdrehung der Leistenteile 31, 40 erfolgt. Da die Zubringer-Kurvenbahn 24 nur für einen Teil der gesamten Umlaufbewegung notwendig ist, kann sie vergleichsweise leicht und materialsparend ausgeführt sein.

Nachdem das Erntegut aus der Sammelkammer 11 herausgefördert wurde, was ebenfalls über die Auslenkung des Rückhalters 70 festgestellt werden kann, stellt die Steuervorrichtung 82 die Zubringer-Kurvenbahn 24 zurück in die Sammelposition.

## Patentansprüche

1. Fördervorrichtung (10) für eine Ballenpresse (1), mit einer sich entlang einer axialen Zubringerachse (B) erstreckenden Zubringerleiste (30), die einen ersten Leistenteil (31) mit einer Mehrzahl von Zubringerzinken (32) sowie einem Zubringerhebel (33) aufweist, wobei die Fördervorrichtung (10) dazu eingerichtet ist, in einem Sammelmodus mittels der Zubringerzinken (32) Erntegut innerhalb einer Sammelkammer (11) in Richtung auf eine Presskammer (6) zu fördern, und in einem Zubringermodus mittels der Zubringerzinken (32) Erntegut aus der Sammelkammer (11) in die Presskammer (6) zu fördern,
**dadurch gekennzeichnet, dass**
die Zubringerleiste (30) einen zweiten Leistenteil (40) mit einem Zubringer-Sammelhebel (41) aufweist, wobei die Leistenteile (31, 40) um die Zubringerachse (B) gegeneinander verdrehbar und durch eine Kupplung (50) derart verbunden sind, dass sie, ausgehend von einer Anschlagposition, in einer Verdrehungsrichtung (V) rückstellend gegeneinander verdrehbar und in Gegenrichtung (G) verdrehungshindernd gekoppelt sind, wobei die Fördervorrichtung (10) dazu eingerichtet ist, den ersten Leistenteil (31) im Sammelmodus mittels des Zubringer-Sammelhebels (41) und durch Kraftübertragung über die Kupplung (50) zu führen, und ihn im Zubringermodus wenigstens teilweise mittels des Zubringerhebels (33), unter Verdrehung gegenüber dem zweiten Leistenteil (40), zu führen.

2. Fördervorrichtung nach Anspruch 1, **dadurch gekennzeichnet, dass** die Zubringerleiste (30) an einem antreibbaren Leistenträger (12) um die Zubringerachse (B) drehbar gelagert ist.

3. Fördervorrichtung nach einem der vorherigen Ansprüche, **dadurch gekennzeichnet, dass** der Leistenträger (12) als Rotorelement ausgebildet ist, das um eine von der Zubringerachse (B) beabstandete Rotorachse (A) drehend antreibbar ist.

4. Fördervorrichtung nach einem der vorherigen Ansprüche, **dadurch gekennzeichnet, dass** die Fördervorrichtung (10) dazu eingerichtet ist, den ersten Leistenteil (31) im Sammelmodus durch Zusammenwirken eines Sammel-Führungselements (22) mit dem Zubringer-Sammelhebel (41) zu führen, und ihn im Zubringermodus wenigstens teilweise durch Zusammenwirken eines Zubringer-Führungselements (24) mit dem Zubringerhebel (33) zu führen.

5. Fördervorrichtung nach einem der vorherigen Ansprüche, **dadurch gekennzeichnet, dass** diese wenigstens eine Sammelleiste (60) aufweist, die um eine Sammelachse (C) drehbar am Rotorelement (12) gelagert ist und eine Mehrzahl von Sammelzinken (62) sowie einen wenigstens im Sammelmodus mit dem Sammel-Führungselement (22) zusammenwirkenden Sammelhebel (63) aufweist.

6. Fördervorrichtung nach einem der vorherigen Ansprüche, **dadurch gekennzeichnet, dass** die Kupplung (50) wenigstens teilweise innerhalb des ersten Leistenteils (31) aufgenommen ist.

7. Fördervorrichtung nach einem der vorherigen Ansprüche, **dadurch gekennzeichnet, dass** die Kupplung (50) ein drehfest mit dem ersten Leistenteil (31) verbundenes erstes Kupplungsteil (51) aufweist sowie ein drehfest mit dem zweiten Leistenteil (40) verbundenes zweites Kupplungsteil (52), wobei die Kupplungsteile (51, 52) in der Anschlagposition wenigstens indirekt einen tangentialen Formschluss miteinander bilden, sowie wenigstens ein elastisches Federelement (54), das wenigstens indirekt kraftübertragend mit beiden Leistenteilen (31, 40) verbunden ist.

8. Fördervorrichtung nach einem der vorherigen Ansprüche, **dadurch gekennzeichnet, dass** wenigstens ein Federelement (54) als Torsionsfeder ausgebildet ist.

9. Fördervorrichtung nach einem der vorherigen Ansprüche, **dadurch gekennzeichnet, dass** der zweite Leistenteil (40) eine axial verlaufende Welle (43) aufweist, die wenigstens überwiegend innerhalb des ersten Leistenteils (31) angeordnet ist.

10. Fördervorrichtung nach einem der vorherigen Ansprüche, **dadurch gekennzeichnet, dass** das Zubringer-Führungselement (24) dazu ausgebildet ist, im Zubringermodus nur zeitweise mit dem Zubringerhebel (33) zusammenzuwirken, so dass der erste Leistenteil (31) zwischenzeitlich durch Zusammenwirken des Sammel-Führungselements (22) mit dem Zubringer-Sammelhebel (41) geführt ist.

11. Fördervorrichtung nach einem der vorherigen Ansprüche, **dadurch gekennzeichnet, dass** das Sammel-Führungselement wenigstens eine Sammel-Kurvenbahn (22) aufweist, mit welcher der Zubringer-Sammelhebel (41) wenigstens im Sammelmodus mittels wenigstens eines von der Zubringerachse (B) beabstandeten Sammel-Eingriffselements (42) eingreift, und das Zubringer-Führungselement wenigstens eine Zubringer-Kurvenbahn (24) aufweist, mit welcher der Zubringerhebel (33) im Zubringermodus mittels wenigstens eines von der Zubringerachse (B) beabstandeten Zubringer-Eingriffselements (34) eingreift.

12. Fördervorrichtung nach einem der vorherigen Ansprüche, **dadurch gekennzeichnet, dass** die Sammel-Kurvenbahn (22) im Sammelmodus und im Zubringermodus in der gleichen Position angeordnet ist, so dass der zweite Leistenteil (40) durch die Sammel-Kurvenbahn (22) mittels des Zubringer-Sammelhebels (41) im Sammelmodus wie im Zubringermodus geführt ist.

13. Fördervorrichtung nach einem der vorherigen Ansprüche, **dadurch gekennzeichnet, dass** die Zubringer-Kurvenbahn (24) im Sammelmodus in einer Sammelposition angeordnet ist, in welcher das Zubringer-Eingriffselement (34) mit ihr außer Eingriff gehalten ist, und im Zubringermodus in eine Zubringerposition verstellt ist, in welcher das Zubringer-Eingriffselement (34) mit ihr in Eingriff bringbar ist.

14. Fördervorrichtung nach einem der vorherigen Ansprüche, **dadurch gekennzeichnet, dass** die Zubringer-Kurvenbahn (24) zwischen der Sammelposition und der Zubringerposition verschwenkbar ist.

15. Fördervorrichtung nach einem der vorherigen Ansprüche, **dadurch gekennzeichnet, dass** diese einen die Sammelkammer (11) gegenüber der Presskammer (6) abgrenzenden Rückhalter (70) aufweist, wobei durch eine Steuereinrichtung (82) ein Wechsel vom Sammelmodus zum Zubringermodus in Abhängigkeit von einer Einwirkung des Ernteguts auf den Rückhalter (70) auslösbar ist.

16. Zubringerleiste (30) für eine Fördervorrichtung (10) einer Ballenpresse (1), insbesondere nach einem der vorherigen Ansprüche, welche Zubringerleiste (30) sich entlang einer axialen Zubringerachse (B) erstreckt und einen ersten Leistenteil (31) mit einer Mehrzahl von Zubringerzinken (32) sowie einem Zubringerhebel (33) aufweist, wobei die Zubringerleiste (30) dazu vorgesehen ist, in einem Sammelmodus mittels der Zubringerzinken (32) Erntegut innerhalb einer Sammelkammer (11) in Richtung auf eine Presskammer (6) zu fördern, und in einem Zubringermodus mittels der Zubringerzinken (32) Erntegut aus der Sammelkammer (11) in die Presskammer (6) zu fördern,
**dadurch gekennzeichnet, dass**
die Zubringerleiste (30) einen zweiten Leistenteil (40) mit einem Zubringer-Sammelhebel (41) aufweist, wobei die Leistenteile (31, 40) um die Zubringerachse (B) gegeneinander verdrehbar und durch eine Kupplung (50) derart verbunden sind, dass sie, ausgehend von einer Anschlagposition, in einer Verdrehungsrichtung (V) rückstellend gegeneinander verdrehbar und in Gegenrichtung (G) verdrehungshindernd gekoppelt sind, wobei der erste Leistenteil (31) im Sammelmodus mittels des Zubringer-Sammelhebels (41) und durch Kraftübertragung über die Kupplung (50) führbar ist, und im Zubringermodus wenigstens teilweise mittels des Zubringerhebels (33), unter Verdrehung gegenüber dem zweiten Leistenteil (40), führbar ist.

17. Ballenpresse (1), aufweisend eine Sammelkammer (11), eine Presskammer (6) sowie eine Fördervorrichtung (10), insbesondere nach einem der vorherigen Ansprüche, mit einer sich entlang einer axialen Zubringerachse (B) erstreckenden Zubringerleiste (30), die einen ersten Leistenteil (31) mit einer Mehrzahl von Zubringerzinken (32) sowie einem Zubringerhebel (33) aufweist, wobei die Fördervorrichtung (10) dazu eingerichtet ist, in einem Sammelmodus mittels der Zubringerzinken (32) Erntegut innerhalb der Sammelkammer (11) in Richtung auf die Presskammer (6) zu fördern, und in einem Zubringermodus mittels der Zubringerzinken (32) Erntegut aus der Sammelkammer (11) in die Presskammer (6) zu fördern,
**dadurch gekennzeichnet, dass**
die Zubringerleiste (30) einen zweiten Leistenteil (40) mit einem Zubringer-Sammelhebel (41) aufweist, wobei die Leistenteile (31, 40) um die Zubringerachse (B) gegeneinander verdrehbar und durch eine Kupplung (50) derart verbunden sind, dass sie, ausgehend von einer Anschlagposition, in einer Verdrehungsrichtung (V) rückstellend gegeneinander verdrehbar und in Gegenrichtung (G) verdrehungshindernd gekoppelt sind, wobei die Fördervorrichtung (10) dazu eingerichtet ist, den ersten Leistenteil (31) im Sammelmodus mittels des Zubringer-Sammelhebels (41) und durch Kraftübertragung über die Kupplung (50) zu führen, und ihn im Zubringermodus wenigstens teilweise mittels des Zubringerhebels (33), unter Verdrehung gegenüber dem zweiten Leistenteil (40), zu führen.
